# EUROPEAN PATENT APPLICATION

(11) **EP 4 667 964 A1**
(43) Date of publication of application: **24.12.2025**
(21) Application number: 24182477.0
(22) Date of filing: 17.06.2024
(51) Int. Cl.: G01S 7/48, G01S 17/42, G01S 17/931

(54) **METHOD AND DEVICE FOR DETECTING A RISK OF COLLISION WHEN A DOOR OF A MOTOR VEHICLE IS OPENED**

(71) Applicant: MINEBEA ACCESSSOLUTIONS ITALIA S.P.A., 10044 Pianezza (IT)
(72) Inventor: PIERI, Alexandre, 10044 Pianezza (IT); PEYNOT, Thomas, 10044 PIANEZZA (IT)
(74) Representative: Germain Maureau

(57) **Abstract**

The present disclosure relates to a method for controlling a lock mechanism of a motor vehicle door (1), the method comprising: simultaneously rotating an event-based sensor (3) about an axis and acquiring, by a processing unit, pixel data from a time-of-flight sensor (6) embedded in the vehicle and from the event-based sensor; processing, by the processing unit, the pixel data from the time-of-flight sensor and from the event-based sensor, to detect objects in a scene observed by the time-of-flight sensor and by the event-based sensor and determine a distance of a nearest of the detected objects from the vehicle; determining if there is a risk of collision between the vehicle door when opened and the nearest detected object; and if the risk of collision is present, triggering, by the processing unit, a warning signal directed to the user and/or controlling the lock mechanism to lock the vehicle door.

## Description

### TECHNICAL FIELD

The present invention generally relates to the field of safety devices for motor vehicles and doors of motor vehicles.

### BACKGROUND

Motor vehicles typically include doors, such as side doors and tailgates. When a user inside a vehicle opens a side door, a mobile or fixed obstacle may be present in the area swept by the side door when the latter is opened. This obstacle can be for example a concrete stud or an edge of a raised sidewalk. Thus it may be not visible by the user through the window of the door as it can be located below the user's field of vision through the window. In addition, the user does not necessarily pay attention to obstacles that can be hit by the door when he opens the latter.

Therefore, there is a need to improve safety when a user opens a vehicle side door, for preventing the door from hitting an obstacle.

The lock devices of motor vehicle doors comprise an external handle associated to a door of the vehicle, a lock mechanism for locking the door in a closed position and having a lock state and an unlock state and a control device for actuating the lock mechanism between the lock and unlock states.

Today, the access functions to the motor vehicles include more and more sensors to detect an opening command to trigger unlocking of the vehicle. This opening command usually occurs after user action such as pulling on a handle of a vehicle door. Such sensors are for example an NFC ("Near Field Communication") antenna, capacitive sensors, inductive sensors, strain gauge force sensors, piezo sensors. All this family of sensors always requires the user to be in close proximity of the vehicle to control a door lock mechanism: the NFC detection range is lower than a few centimeters, the capacitive sensor detection range is lower that one centimeter, and strain gauges and piezo sensors require a touch or contact. Other contactless solutions such as those using UWB ("Ultra Wide Band") appear to be easily operable by non-authorized persons and thus raise security issues.

Emerging solutions use cameras for facial recognition to recognize and identify a current user of the vehicle. In one example, a visible field camera integrated into the B-pillar of the vehicle allows user recognition on approach. Upon identification of the user the vehicle is unlocked and other configurable features are set up to the identified user. Such solutions using standard cameras or imagers require complex and powerful computing means to analyze and to filter a huge quantity of data (pixels) in times preserving a good user experience. This makes these solutions costly and cumbersome and therefore difficult to integrate into a vehicle, especially in a vehicle door.

Radars are also used for obstacle detection, but they suffer the same difficulty of data processing in addition to difficulty of mechanical integration due to the size of their packaging.

Thus, there is need for a suitable solution to detect obstacles in the area swept by a vehicle door.

### SUMMARY

The present disclosure is related to a method for controlling a lock mechanism of a motor vehicle door, the method comprising: simultaneously rotating an event-based sensor about an axis and acquiring, by a processing unit, pixel data from a time-of-flight sensor embedded in the vehicle and from the event-based sensor; processing, by the processing unit, the pixel data from the time-of-flight sensor and from the event-based sensor, to detect objects in a scene observed by the time-of-flight sensor and by the event-based sensor and determine a distance of a nearest of the detected objects from the vehicle; determining if there is a risk of collision between the vehicle door when opened and the nearest detected object; and when the risk of collision is present, triggering, by the processing unit, a warning signal directed to the user, and/or controlling the lock mechanism to lock the vehicle door.

Thanks to these dispositions, it is possible to detect a risk of collision of the door with fixed objects when the latter is opened, and thus to prevent the door from being damaged by the collision. In addition, the use of an event-based sensor enables detection of movements, without having a huge amount of pixel data to process. The time-of-flight sensor has the advantage of being much more compact than a radar and thus can be easily integrated into a handle of a vehicle door.

According to an embodiment, the event-based sensor is integrated into a handle of the vehicle door.

In the handle of the vehicle door, the event-based sensor and the time-of-flight sensor can have a large field of view, the handle being generally positioned in a convex-shaped part of the vehicle. In addition, some handles are motorized to be moved between a retracted position when the door is locked and a deployed position when the door is unlocked door so as to be graspable by a user. Such a motorization can be advantageously used to rotate the handle with the sensors. Thus there is no need to provide a dedicated motorization for rotating the sensors.

According to an embodiment, the lock mechanism comprises a motorization to move the handle between a retracted position in which the handle is flush with an exterior surface of the vehicle door when the vehicle door is locked, and a deployed position in which the handle is protruding from the exterior surface of the door so as to be graspable by a user, the event-based sensor being integrated into the handle and rotated with the handle by the motorization.

Such a motorization can be advantageously used to rotate the handle with the sensors. Thus there is no need to provide a dedicated motorization for rotating the event-based sensor.

According to an embodiment, the time-of-flight sensor is integrated into a handle of the vehicle door.

Thus, the time-of-flight sensor does not need to have a large field of view.

According to an embodiment, the event-based sensor and the time-of-flight sensor are sensitive to light in the near infrared wavelength band.

Thus the sensors are well suited for detecting objects and persons as well as under daylight and night-time conditions.

According to an embodiment, the event-based sensor is sensitive to the light emitted by an emitter unit of the time-of-flight sensor.

Thus the detection of objects around the vehicle door can be performed even in an unlit environment.

Embodiments may also relate to a system for controlling a lock mechanism of a vehicle door, the system comprising: an event-based sensor embedded in the vehicle, a time-of-flight sensor embedded in the vehicle, a processing unit connected to the event-based sensor, the time-of-flight sensor and the lock mechanism, and configured to implement the method as defined above.

According to an embodiment, the event-based sensor is embedded in the handle of the vehicle door.

According to an embodiment, the time-of-flight sensor is embedded in the handle of the vehicle door.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a schematic front view of a vehicle door, according to an embodiment;
Figure 2 is schematic front view of a handle of the vehicle door, according to an embodiment;
Figure 3 is a perspective view of the handle, according to an embodiment.
Figure 4 is an exploded perspective view of the handle and a structure in the vehicle door for securing the handle, according to an embodiment;
Figure 5 is a block diagram of a detection device equipping the vehicle door, according to an embodiment;
Figure 6 is a rear view of a vehicle equipped with the detection device.

### DETAILED DESCRIPTION

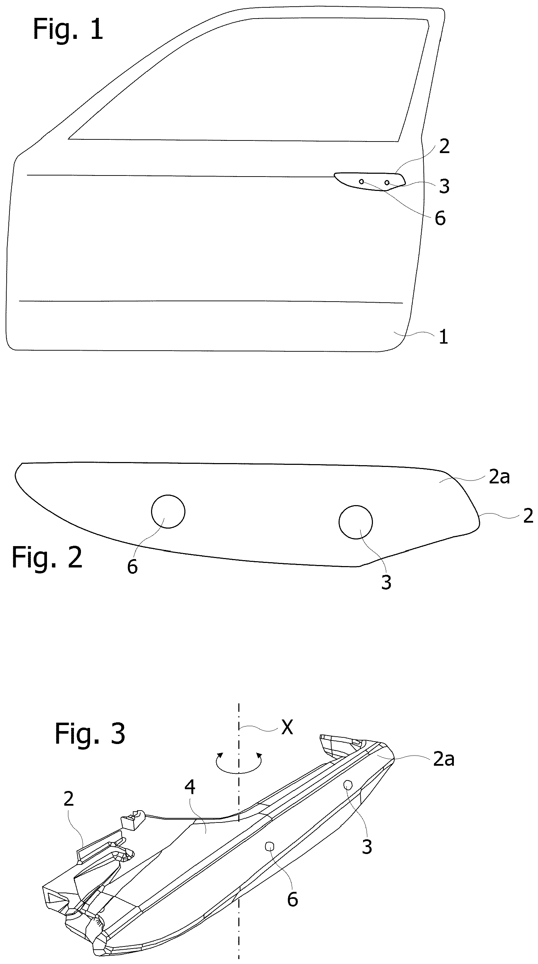

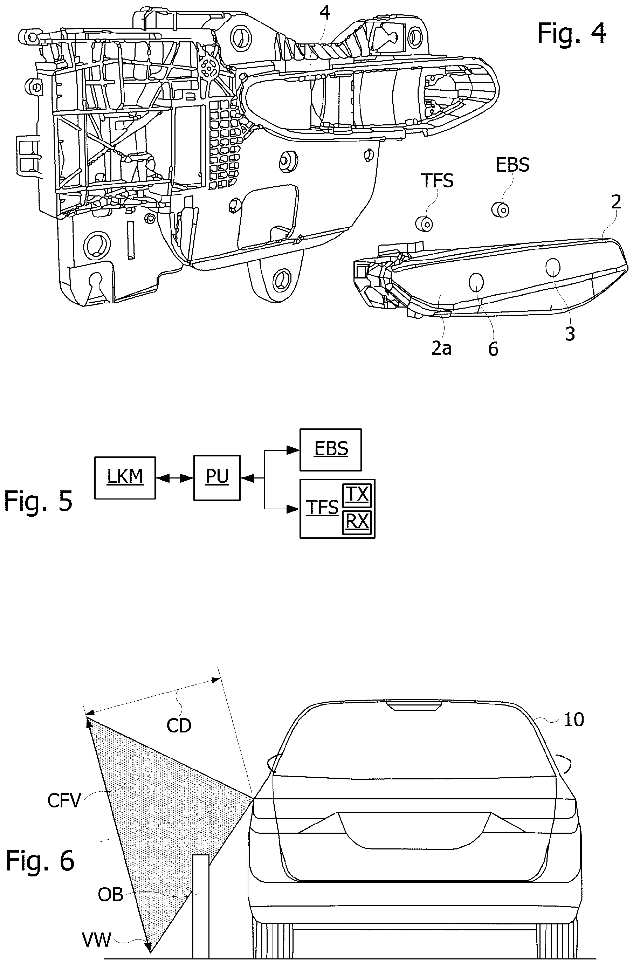

Figure 1 shows a front door 1 of a motor vehicle. The front door 1 comprises a handle 2. Figure 2 shows a front panel 2a of the handle 2. Figure 3 shows the handle 2. Figure 4 shows the handle 2 and a structure 4 installed in the vehicle door 1 for fixing the handle 2, the front panel 2a being fixed to the handle 2.

The handle 2 may be of any type of handle that can integrate an image sensor, such as a wing handle, a rotary or translational flush handle, or a swing, bowl or grip handle. A rotary flush handle has a retracted position when the door 1 is locked and a deployed position when the door is unlocked. In the retracted position, the front panel 2a of the handle 2 is flush with the exterior surface of the door 1. In the deployed position, the handle 2 is protruding from the exterior surface of the door so as to be graspable by a user. A lock mechanism can be configured to move the handle 2 between its retracted and deployed positions.

According to an embodiment, the handle 2 houses an event-based sensor or camera EBS and a time-of-flight sensor TFS. The event-based sensor has a lens centered on a window 3. The time-of-flight sensor TFS has a lens centered on a window 6. The windows 3, 6 are formed in the front panel 2a of the handle 2. The windows 3 and 6 can be closed by a transparent cover made of for example a thermoplastic polymer such as PMMA (PolyMethyl MethAcrylate).

As illustrated by figure 5, the event-based sensor EBS and the time-of-flight sensor TFS are connected to a processing unit PU controlling a door lock mechanism LKM of the vehicle door 1. The sensor TFS comprises an emitter unit TX for illuminating the scene observed by the sensor, a receiver unit RX for receiving the light transmitted by the emitter unit and reflected by objects of the scene observed by the sensor TFS and is configured to measure the time between the instant of emission of the light by the emitter unit and the instant of reception of the light by the receiver unit.

Instead of capturing images at fixed intervals as a conventional image sensor and providing complete matrix with the state of all pixels, the event-based sensor EBS detects changes in the observed scene end and only provides a short train of data related only to pixels submitted to a change. Thus, in the pixel data stream provided by the event-based sensor, the pixels are used as single sensors: a signal related to a pixel of the image of the scene is provided only in case of a specific event such as a movement or a change in brightness of the pixel. Due to the small amount of data provided, the event-based sensor allows for high temporal resolution and low latency.

In addition, the event-based sensors have the advantage of being very compact, e.g. 3 mm x 4 mm.

Figure 6 shows a field CFV observed by the sensors EBS and TFS. At the distance CD, the viewed field CFV has a width VW. The maximum value of the distance CD can be 5 m, depending on the optic quality of the sensor EBS. The observed field CFV is positioned to detect any object that can be hit by the vehicle door when the latter is opened. If necessary the sensors EBS and TFS can be oriented downwards as shown in figure 6 to extend the observed field CFV downwards. It can be observed that the integration of the sensors EBS and TFS into the door handle 2 has the advantage of being placed in a generally convex-shaped location of the vehicle, thus providing a large field of view to the sensors. However, the sensors EBS, TFS can be integrated into the vehicle in any other place such as in a lateral exterior rear-view mirror or in the B-pillars (along the rear edges of the front doors) of the vehicle.

According to an embodiment, the processing unit PU is configured to control the door lock mechanism LKM to rotate a door handle 2, e.g. about a rotation axis X, and to analyze and correlate pixel data provided by the sensors EBS and TFS, to detect objects that can be hit by the vehicle door 1 when opened. When the handle 2 moves, the fixed objects of the scene observed by the event-based sensor EBS are seen moving by the sensor EBS and therefore the pixel data provided by the event-based sensor EBS enable the processing unit PU to generate an image of the fixed objects in the scene around the vehicle door as observed by the sensor EBS. The data provided by the time-of-flight sensor TFS enable to estimate a distance of the nearest object OB in the scene observed by the sensor. The processing unit HP is configured to trigger a warning signal when the nearest detected object in the scene is at a distance from the sensors EBS, TFS lower than a distance threshold. The distance threshold is defined such that the vehicle door 1 can be opened without any risk that it hits the detected nearest object. The warning signal can be a sound and/or a light. In addition, the lock mechanism LKM can be controlled to lock the door 1 if any door opening can hit the detected nearest object and damage the vehicle door or create an incident.

The detection of an obstacle in the area needed to open the vehicle door can be activated only when the vehicle is stopped.

According to an example, the rotation axis X is vertical.

According to an embodiment, the event-based sensor EBS is sensitive to the light emitted by the emitter unit TX of the -of-flight sensor TFS. According to an example, the sensors EBS and TFS are sensitive to light in the near infrared wavelength band (e.g. 780 nm to 2500 nm). Thus, the sensor EBS can also detect a person or an obstacle even in a dark environment (e.g. during the night or in a dimly lit parking).

According to an embodiment, the processing unit PU is further configured to analyze the pixel data provided by the sensor EBS to detect movements of a user and recognize gestures. The processing unit PU is further configured to control the door lock mechanism LKM of the vehicle door 1 as a function of the detected gestures of the user.

According to an example, the processing unit PU is configured to trigger locking of the lock mechanism upon detection of a locking movement of the hand of the user in sign language, i.e. a rotation movement of the hand around an arm axis, the fist being clenched. The processing unit PU is configured to trigger unlocking of the lock mechanism upon detection of a "come on" sign in sign language, i.e. a back and forth movement of the hand fingers, the hand palm facing up.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that the event-based sensor EBS is not necessarily integrated into a motorized handle to be rotated to acquire pixel data of fixed objects around the vehicle door. It can be associated with a dedicated motorization. It can also be integrated into a motorized rotating part of the vehicle such as a lateral exterior rear-view mirror.

In addition, the time-of-flight sensor TFS is not necessarily integrated into the handle 2 or rotated with the event-based sensor EBS. It can have a large field of view covering all the field of view covered by the event-based sensor when rotated.

## Claims

1. A method for controlling a lock mechanism (LKM) of a motor vehicle door (1), the method comprising:
simultaneously rotating an event-based sensor (EBS) about an axis (RX) and acquiring, by a processing unit (PU), pixel data from a time-of-flight sensor (TFS) embedded in the vehicle and from the event-based sensor (EBS);
processing, by the processing unit, the pixel data from the time-of-flight sensor and from the event-based sensor, to detect objects (OB) in a scene observed by the time-of-flight sensor and by the event-based sensor and determine a distance of a nearest of the detected objects from the vehicle;
determining if there is a risk of collision between the vehicle door when opened and the nearest detected object (OB); and
when the risk of collision is present, triggering, by the processing unit, a warning signal directed to the user, and/or controlling the lock mechanism to lock the vehicle door.

2. The method of claim 1, wherein the event-based sensor (EBS) is integrated into a handle (2) of the vehicle door (1).

3. The method according to claim 1 or 2, wherein the lock mechanism (LKM) comprises a motorization to move the handle between a retracted position in which the handle is flush with an exterior surface of the vehicle door (1) when the vehicle door is locked, and a deployed position in which the handle is protruding from the exterior surface of the door so as to be graspable by a user, the event-based sensor (EBS) being integrated into the handle and rotated with the handle by the motorization.

4. The method according to one of claims 1 to 3, wherein the time-of-flight sensor (TFS) is integrated into a handle (2) of the vehicle door (1).

5. The method according to one of claims 1 to 4, wherein the event-based sensor (EBS) and the time-of-flight sensor (TFS) are sensitive to light in the near infrared wavelength band.

6. The method according to one of claims 1 to 5, wherein the event-based sensor (EBS) is sensitive to the light emitted by an emitter unit (TX) of the time-of-flight sensor (TFS).

7. A system for controlling a lock mechanism of a vehicle door, the system comprising:
an event-based sensor (EBS) embedded in the vehicle,
a time-of-flight sensor (TFS) embedded in the vehicle,
a processing unit (PU) connected to the event-based sensor, the time-of-flight sensor and the lock mechanism (LKM), and configured to implement the method of one of claims 1 to 6.

8. The system according to claim 7, wherein the event-based sensor (EBS) is embedded in the handle (2) of the vehicle door (1).

9. The system according to claim 7 or 8, wherein the time-of-flight sensor (TFS) is embedded in the handle (2) of the vehicle door (1).
